# EUROPEAN PATENT SPECIFICATION

(11) **EP 3 160 266 B1**
(45) Date of publication and mention of the grant of the patent: **24.02.2021**
(21) Application number: 15714547.5
(22) Date of filing: 14.04.2015
(51) Int. Cl.: A23G 1/40, A23G 3/42, A23G 4/10, A21D 13/062, A23L 33/26, A23L 2/60, A23G 9/34, A21D 2/18, A23L 27/30

(54) **SUGAR REPLACEMENT COMPOSITION**
ZUCKERERSATZZUSAMMENSETZUNG
COMPOSITION DE REMPLACEMENT DE SUCRE

(30) Priority: 14.04.2014 EP 14164559
(43) Date of publication of application: 03.05.2017
(73) Proprietor: Zùsto NV, 2800 Mechelen (BE)
(72) Inventor: DE BAETS, Sophie, 9980 Sint-Laureins (BE)
(74) Representative: Hoffmann Eitle
(86) International application number: PCT/EP2015/058106
(87) International publication number: WO 2015/158735

(56) References cited:
- EP-A1- 1 992 236
- EP-A1- 2 599 390
- WO-A2-2008/082596
- CA-A1- 2 613 716
- JP-A- H1 175 762
- US-A1- 2006 051 480
- US-A1- 2008 081 093
- US-A1- 2008 260 925
- US-B2- 7 416 754

## Description

### 1. Field of the Invention

The present invention relates to sugar replacement compositions. It relates in particular to compositions that are not only sweet but which furthermore exhibit other functional characteristics of sugar, such as the structural characteristics and/or browning effects of sugar. The sugar replacement compositions of the present invention are furthermore characterized by various health benefits including reduced caloric value, lower glycemic index, and superior tooth friendliness.

### 2. Background of the Invention

Sugar is commonly used as an ingredient in various foods, beverages and related products such as chewing gums. However, due to its high caloric value and susceptibility for digestion by various bacteria, sugar has undesired detrimental effects on the consumer's health. Therefore, various efforts have been made to replace sugar by alternative sweetening agents or sweetening compositions in foods and beverages. Some of them are sweeteners such as the commercial product Splenda®, which primarily contain high intensity sweeteners like sucralose. Some other sugar replacement compositions have been developed, which are primarily based on polyols, polysaccharides and/or oligosaccharides and which may additionally contain high intensity sweeteners. Such sugar replacement compositions are disclosed, for instance, in WO 2006/015880 A1.

However, commercial sweeteners like Splenda® cannot be used as a substitute for sugar in applications such as bakery products or ice cream since the commercial sweetener does not provide the functional (e.g. structural) characteristics of sugar.

Sugar replacement compositions such as the compositions described in WO 2006/015880 A1 may be used for replacing sugar also in bakery products and the like since such sugar replacement compositions also exhibit functional characteristics of sugar. However, these compositions are still unsatisfactory because they have a too high caloric value and because they are unsatisfactory in view of health considerations (glycemic index, tooth friendliness, etc.). Moreover, having regard to the compositions of WO 2006/015880 A1, there is still room for further improvement regarding the accomplishment of functional characteristics of sugar, e.g. in respect of the crunchiness of biscuits.

The present invention therefore has the objective of providing sugar replacement compositions, which avoid the above detrimental effects and which exhibit, in particular, one or more of the following advantageous characteristics:
- low caloric value;
- low glycemic index;
- improved tooth friendliness;
- improved structural effects in bakery products;
- improved crunchiness of biscuits; and/or
- improved structural effects in sorbet and ice cream.

Further objectives and beneficial effects of the sugar replacement compositions of the present invention will become apparent from the following description of the present invention.

### 3. Summary of the Invention

The present invention achieves the above objectives by providing sugar replacement compositions as specified in the appended claims.

### 4. Detailed Description of the Invention

### 4.1. Definitions

Unless specified otherwise, all % indications are meant to be indications of weight%. Moreover, unless specified otherwise, all weight% indications are meant to be based on the total weight of the sugar replacement composition being 100 weight%.

The term "polysaccharide" refers to all linear or branched molecules containing 10 or more saccharide repeating units. Such repeating units may be the same or differ from each other. If a compound is present in the form of a mixture of different molecules with differing degrees of polymerization, the compound is to be regarded as a polysaccharide if it has an average degree of polymerization of 10 or more.

The term "oligosaccharide" refers to linear or branched molecules containing two or more but less than 10 saccharide repeating units. Such repeating units may be the same or differ from each other. If a compound is present in the form of a mixture of molecules having different degrees of polymerization, the compound is to be regarded as an oligosaccharide if its average degree of polymerization is less than 10.

References to "polysaccharide components" and "oligosaccharide components" are meant to be references to those components of a composition of one or more components, which exhibit a degree of polymerization of 10 or more (polysaccharide components) and less than 10 (oligosaccharide components), respectively. Thus, for example, a particular compound having an average degree of polymerization above 10 will be regarded as a polysaccharide in the context of the present invention; nevertheless, it may contain not only polysaccharide components but also oligosaccharide components.

The term "high intensity sweetener" is meant to refer to substances having a sweetness that is at least 30 times higher than that of sucrose.

The term "flavour enhancer" is meant to refer to substances that have the effect of increasing the sweetness sensation created by other sweet substances.

The term "soluble" is meant to refer to substances having a solubility of 1 g or more in 100 ml water at 20°C. This is determined by mixing 1 g of the test substance with 100 ml of water and stirring the resultant at the specified temperature. If the test substance is soluble, it will form a clear solution or, especially in case of polymeric substances, a clear viscous or gel-like substance.

The term "insoluble" is meant to refer to substances that are not soluble according to the above definition. Such compounds form a turbid dispersion or suspension when being subjected to the above test conditions.

The term "non-selective non-digestible polysaccharide" is meant to refer to polysaccharides that are not digested in the human gastrointestinal tract.

The term "food preparation" is meant to include any product that is suitable for human consumption including solid foods, semi-solid foods, liquid foods (beverages) and related products like chewing gum. Pharmaceuticals and food supplements as such are not to be regarded as food preparations in the context of the present invention. However, it is not excluded that food preparations may contain as one (further) ingredient substances typically found in food supplements or pharmaceuticals, such as vitamins, minerals or substances having antioxidant properties.

The term "sugar" is used in the context of the present application as a synonym for "table sugar", "sucrose" or "saccharose".

Amount indications relying on numerical ranges in the tables below are to be understood such that only those combinations of amounts are intended to be described, which add up to 100 weight% (or less than 100 weight% to allow for the presence of unmentioned additional, optional ingredients).

If point values are indicated, these are to be understood as having a margin of error of ± 10%. This also applies to indications such as "equal sweetness of sugar".

### 4.2. Overview and Compositional Ranges

Having regard to the above objectives, the present inventors have identified erythritol as a particularly advantageous component. It is known that erythritol has a sweetness of about 60 to 70% of the sweetness of sugar but only a very low caloric value of approximately 0.2 kcal/g. However, it is also known that erythritol exhibits a pronounced cooling effect when being dissolved in water. This cooling effect is undesirable for many practical applications and it therefore makes it difficult to use erythritol in sugar replacement compositions. The present inventors have surprisingly found that the cooling effect of erythritol can be masked by combining it with polysaccharides and especially polydextrose. Such combinations of polydextrose and erythritol are thus low in calories, sweet and exhibit a degree of cooling effect, which is acceptable.

Depending on the contemplated practical use of the sugar replacement composition and the expected properties, the compositional ratio as well as the presence of optional further ingredients may be suitably chosen, for instance among the following compositions.

### (a) General considerations applicable to all sugar replacement compositions

The total content of polyols is in the range of 10 to 70 weight%. Within the polyol components, it is possible to use erythritol only but it is also possible to use combinations of erythritol with further polyols such as isomalt, and maltitol The content of erythritol in the sugar replacement composition of the present invention is from 10 weight% to 70 weight% or, in other embodiments, from 21 to 27 weight %. Polysaccharides are suitable for masking the cooling effect of erythritol. Polydextrose is an essential component in this respect. Additionally, further polysaccharides are used. Such additional polysaccharides include, resistant maltodextrin and inulin. Polydextrose is used in an amount of from 30 weight% to weight% and preferably from 40 weight% to 60 weight%.

According to a first embodiment (embodiment (a1), not in accordance with the present invention, the sugar replacement composition has the following ingredients:

| **Component** | **Amount (weight%)** |
|---|---|
| Polydextrose | 30 - 70 |
| Total polyol | 10 - 70 |
| Erythritol | 10 - 70 |

According to an embodiment (a2), not in accordance with the present invention, the sugar replacement composition of the present invention has the following ingredients:

| **Component** | **Amount (weight%)** |
|---|---|
| Polydextrose | 40 - 60 |
| Total polyol | 20 - 60 |
| Erythritol | 20 - 50 |

### (b) Sugar replacement compositions containing resistant maltodextrine

The amount of resistant maltodextrine is in the range of from 3 weight% to 5 weight% The following tables characterize a corresponding composition with resistant maltodextrine not according to the present invention as well as another composition including maltodextrine not according to the present invention.

| | **Composition (b1)** | **Composition (b2)** |
|---|---|---|
| **Component** | **Amount (weight%)** | **Amount (weight%)** |
| Polydextrose | 30 - 70 | 40 - 60 |
| Total polyol | 10 - 70 | 20 - 60 |
| Erythritol | 10 - 70 | 20 - 50 |
| Resistant Maltodextrin | >0 - 6 | 3 - 5 |

### (c) Compositions of the present invention comprising fructan components.

Among the fructan components, inulin, oligofructose and agavin are preferred classes of substances. Relative amounts for each of these substances are typically in the range of from more than 0 weight% to 15 weight% wherein the total amount of fructans should be no more than 30 weight%. According to one aspect of the present disclosure, each of the above-mentioned fructans is either absent completely or present in an amount of from 2 weight% to 12 weight%. According to the present invention, inulin and oligofructose are simultaneously present, wherein the amount of inulin is preferably from 6 to 10 weight%, more preferably from 7 to 9 weight% or from 8 to 12 weight% and more preferably from 9 to 11 weight%, and wherein the amount of oligofructose is preferably from 4 to 8 weight%, more preferably from 5 to 7 weight% or from 8 to 12 weight%, more preferably from 9 to 11 weight%. The total amount of fructans is preferably 22 weight% or less. The corresponding sample compositions according to embodiments of the present disclosure are summarized in the tables below. The described compositions are not in accordance with the present invention, as specified in the appended claims, because not all essential components of the invention are mentioned hereinbelow.

| | **Composition (c1)** | **Composition (c2)** |
|---|---|---|
| **Component** | **Amount (weight%)** | **Amount (weight%)** |
| Polydextrose | 30 - 70 | 40 - 60 |
| Total polyol | 10 - 70 | 20 - 60 |
| Erythritol | 10 - 70 | 20 - 50 |
| Inulin | >0 - 15 | 2 - 12 |
| Total fructan content | >0 - 30 | 2 - 22 |

| | **Composition (c3)** | **Composition (c4)** |
|---|---|---|
| **Component** | **Amount (weight%)** | **Amount (weight%)** |
| Polydextrose | 30 - 70 | 40 - 60 |
| Total polyol | 10 - 70 | 20 - 60 |
| Erythritol | 10 - 70 | 20 - 50 |
| Oligofructose | >0 - 15 | 2 - 12 |
| Total fructan content | >0 - 30 | 2 - 22 |

| | **Composition (c5)** | **Composition (c6)** |
|---|---|---|
| **Component** | **Amount (weight%)** | **Amount (weight%)** |
| Polydextrose | 30 - 70 | 40 - 60 |
| Total polyol | 10 - 70 | 20 - 60 |
| Erythritol | 10 - 70 | 20 - 50 |
| Agavin | >0 - 15 | 2 - 12 |
| Total fructan content | >0 - 30 | 2 - 22 |

| | **Composition (c7)** | **Composition (c8)** |
|---|---|---|
| **Component** | **Amount (weight%)** | **Amount (weight%)** |
| Polydextrose | 30 - 70 | 40 - 60 |
| Total polyol | 10 - 70 | 20 - 60 |
| Erythritol | 10 - 70 | 20 - 50 |
| Inulin | >0 - 15 | 2 - 12 |
| Oligofructose | >0 - 15 | 2 - 12 |
| Total fructan content | >0 - 30 | 4 - 24 |

| | **Composition (c9)** | **Composition (c10)** |
|---|---|---|
| **Component** | **Amount (weight%)** | **Amount (weight%)** |
| Polydextrose | 30 - 70 | 40 - 60 |
| Total polyol | 10 - 70 | 20 - 60 |
| Erythritol | 10 - 70 | 20 - 50 |
| Inulin | >0 - 15 | 2 - 12 |
| Agavin | >0 - 15 | 2 - 12 |
| Total fructan content | >0 - 30 | 4 - 24 |

| | **Composition (c11)** | **Composition (c12)** |
|---|---|---|
| **Component** | **Amount (weight%)** | **Amount (weight%)** |
| Polydextrose | 30 - 70 | 40 - 60 |
| Total polyol | 10 - 70 | 20 - 60 |
| Erythritol | 10 - 70 | 20 - 50 |
| Agavin | >0 - 15 | 2 - 12 |
| Oligofructose | >0 - 15 | 2 - 12 |
| Total fructan content | >0 - 30 | 4 - 24 |

| | **Composition (c13)** | **Composition (c14)** |
|---|---|---|
| **Component** | **Amount (weight%)** | **Amount (weight%)** |
| Polydextrose | 30 - 70 | 40 - 60 |
| Total polyol | 10 - 70 | 20 - 60 |
| Erythritol | 10 - 70 | 20 - 50 |
| Inulin | >0 - 10 | 1 - 8 |
| Oligofructose | >0 - 10 | 1 - 8 |
| Agavin | >0 - 10 | 1 - 8 |
| Total fructan content | >0 - 30 | 3 - 24 |

### (d) Sugar replacement compositions comprising resistant maltodextrine and fructans

Of course, it is also possible to combine the optional ingredients mentioned above to form sugar replacement compositions according to the present invention, which comprise both resistant maltodextrine and one or more fructan-type compounds. Suitable compositional ranges are shown in the following tables.

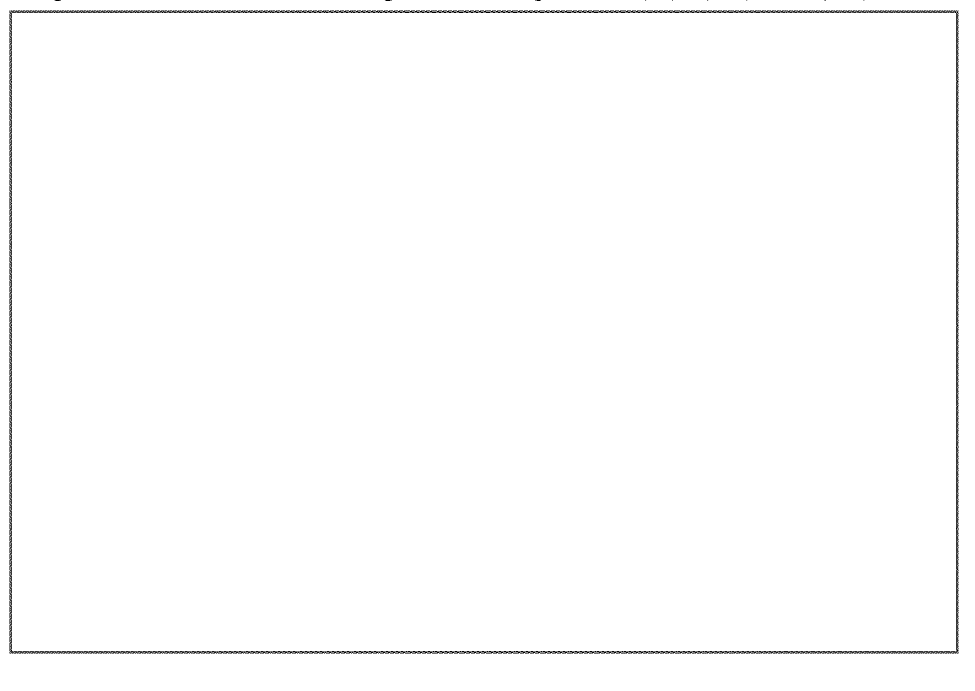

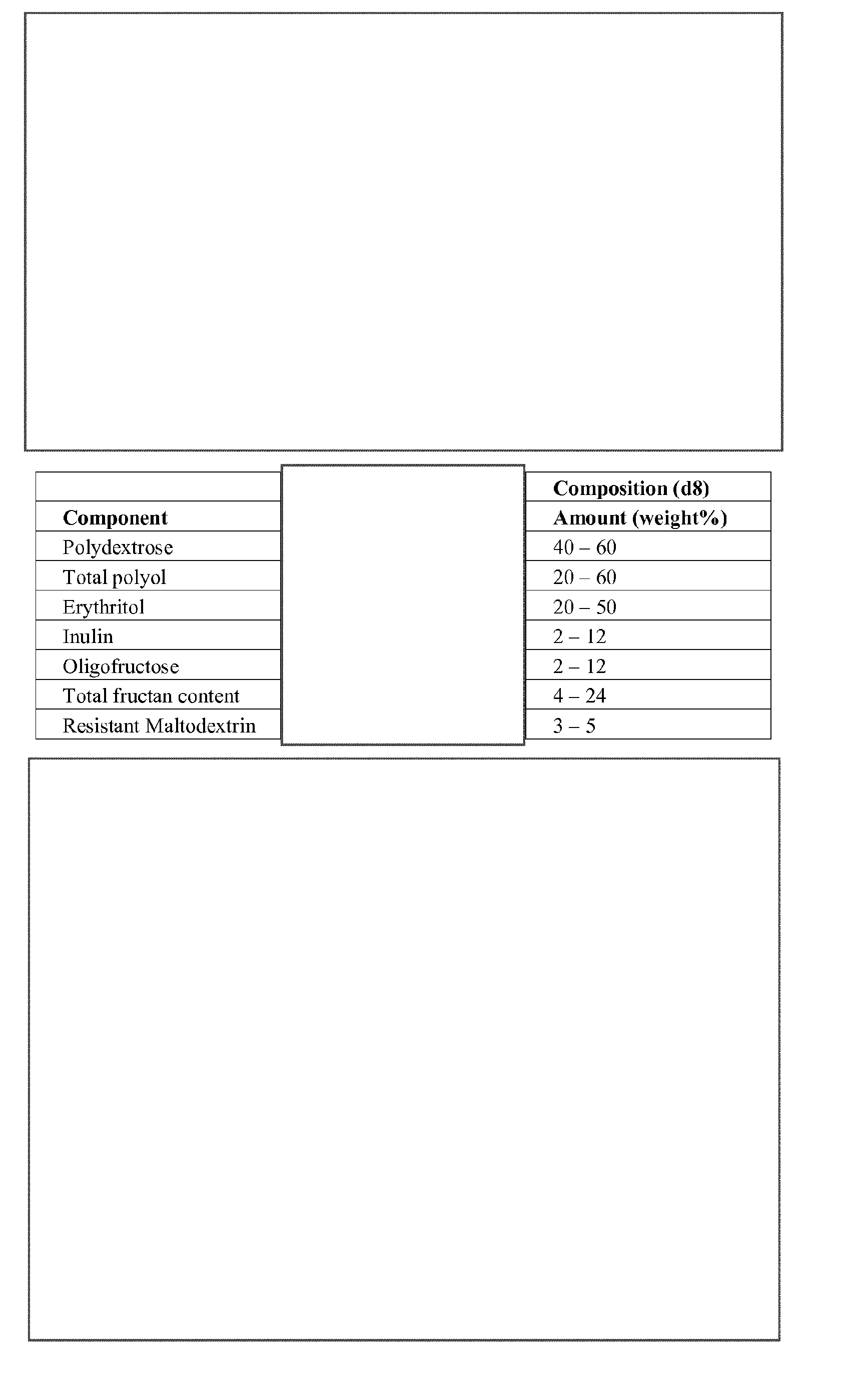

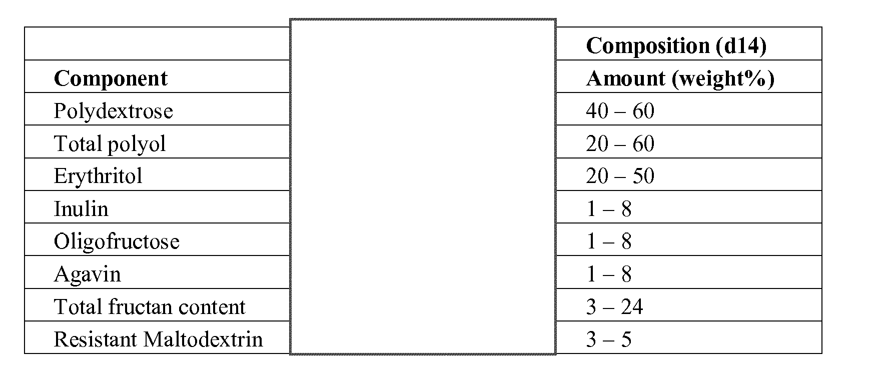

### (e) Sugar replacement compositions comprising high intensity sweeteners and/ or flavour enhancers

Depending on the selected ingredients and relative amounts thereof, the sugar replacement compositions mentioned above will mostly be not as sweet as sugar. In some instances, however, it is desired to use a sugar replacement composition, which provides not only the functional characteristics of sugar, but which also provides sweetness comparable to that of sugar. According to another embodiment, the present invention therefore provides sugar replacement compositions, which further contain high intensity sweeteners and/or flavour enhancers. The relative amount of the high intensity sweetener and/ or flavour enhancer is adjusted such that the overall sweetness of the sugar replacement composition of the present invention reaches the desired level. According to one embodiment, the sweetness is exactly the same or approximately the same as that of sugar (sucrose). This means that the same sweetness effect is accomplished when using the same amount (on a weight basis) as sugar. This can be tested, for instance, by dissolving equal amounts (on a weight basis) of the sugar replacement composition and of sugar in water and by testing sweetness using a taste panel.

Alternatively, it may also be contemplated to employ an amount of high intensity sweetener and/or flavour enhancer to accomplish a level of sweetness that is the same or approximately the same as that of sugar on a volume basis. Considering that the densities of sugar and of the sugar replacement composition of the present invention may differ from each other (depending on degree of crystallinity, granulation, etc.), a different amount of high intensity sweetener and/or flavour enhancer may be needed to accomplish this objective.

Typically, the high intensity sweetener and/or flavour enhancer will be used in relatively small amounts such as 1 weight% or less, preferably 0.5 weight% or less. Suitable amounts for sucralose are typically in the range of from 0.1 to 0.15 weight%. Relative amounts for other high intensity sweeteners may be adjusted relying on the relative ratio of sweetness in comparison with sucralose. Flavour enhancers are typically used in an amount of 0.05 to 0.5 weight% and preferably 0.1 to 0.3 weight%.

Compositions with high intensity sweeteners are described in the tables below.

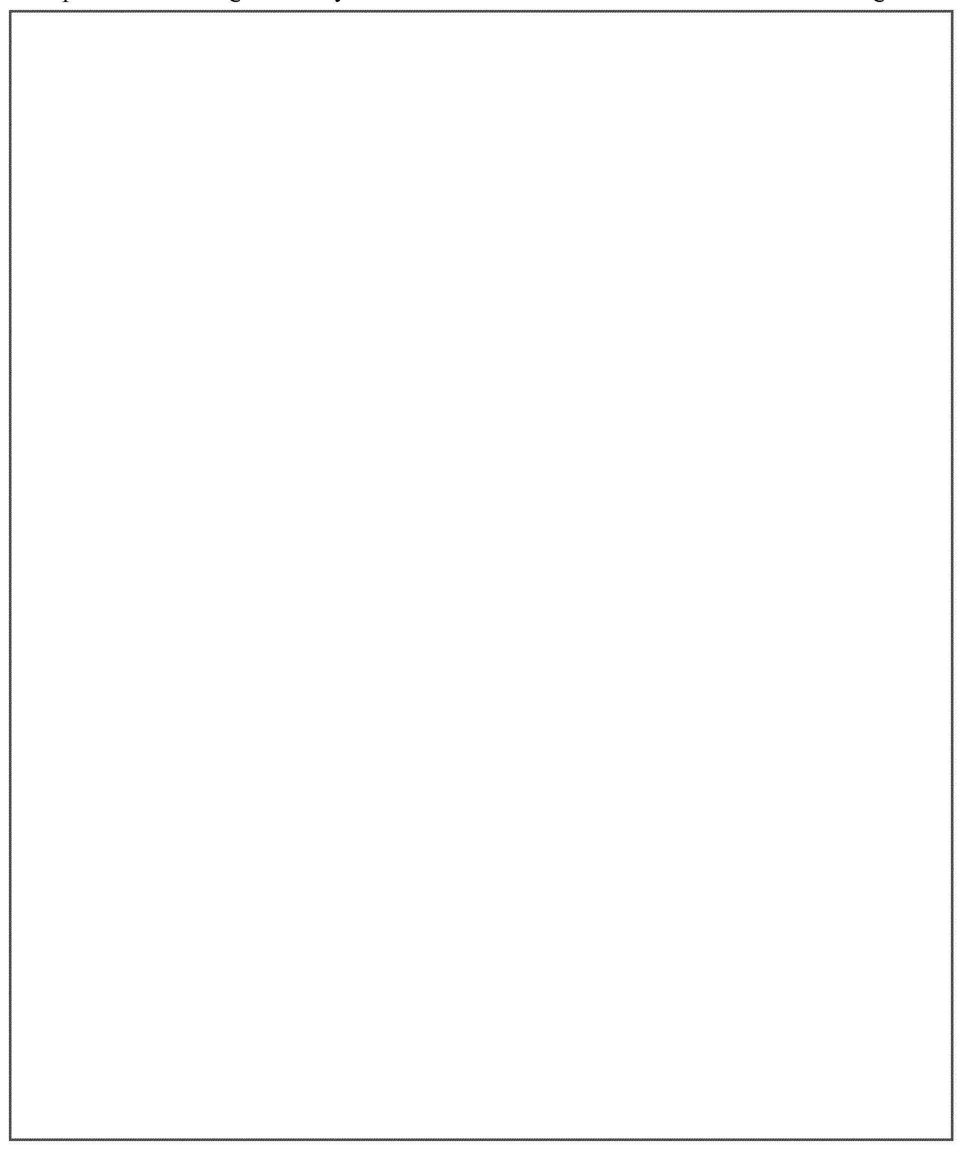

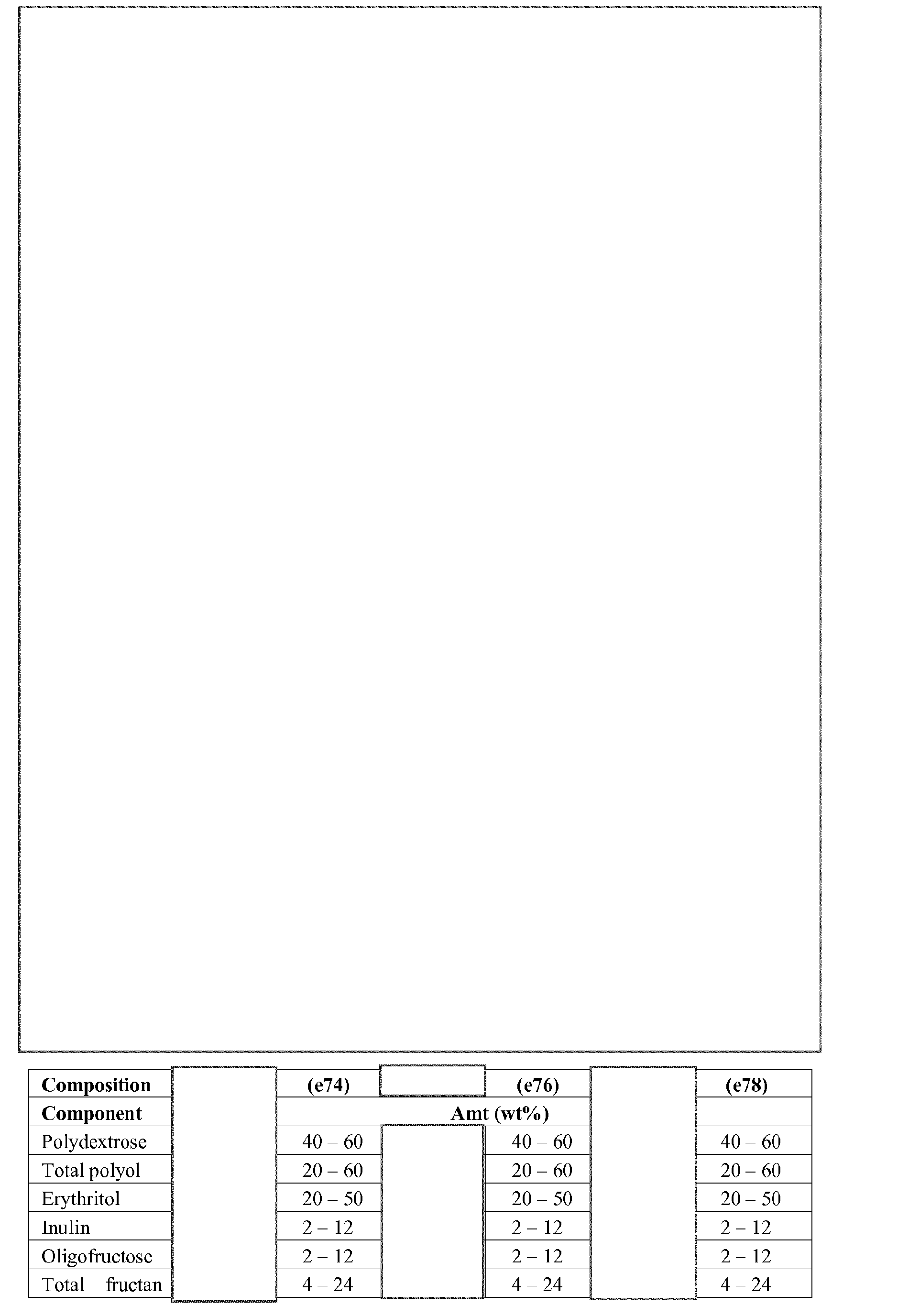

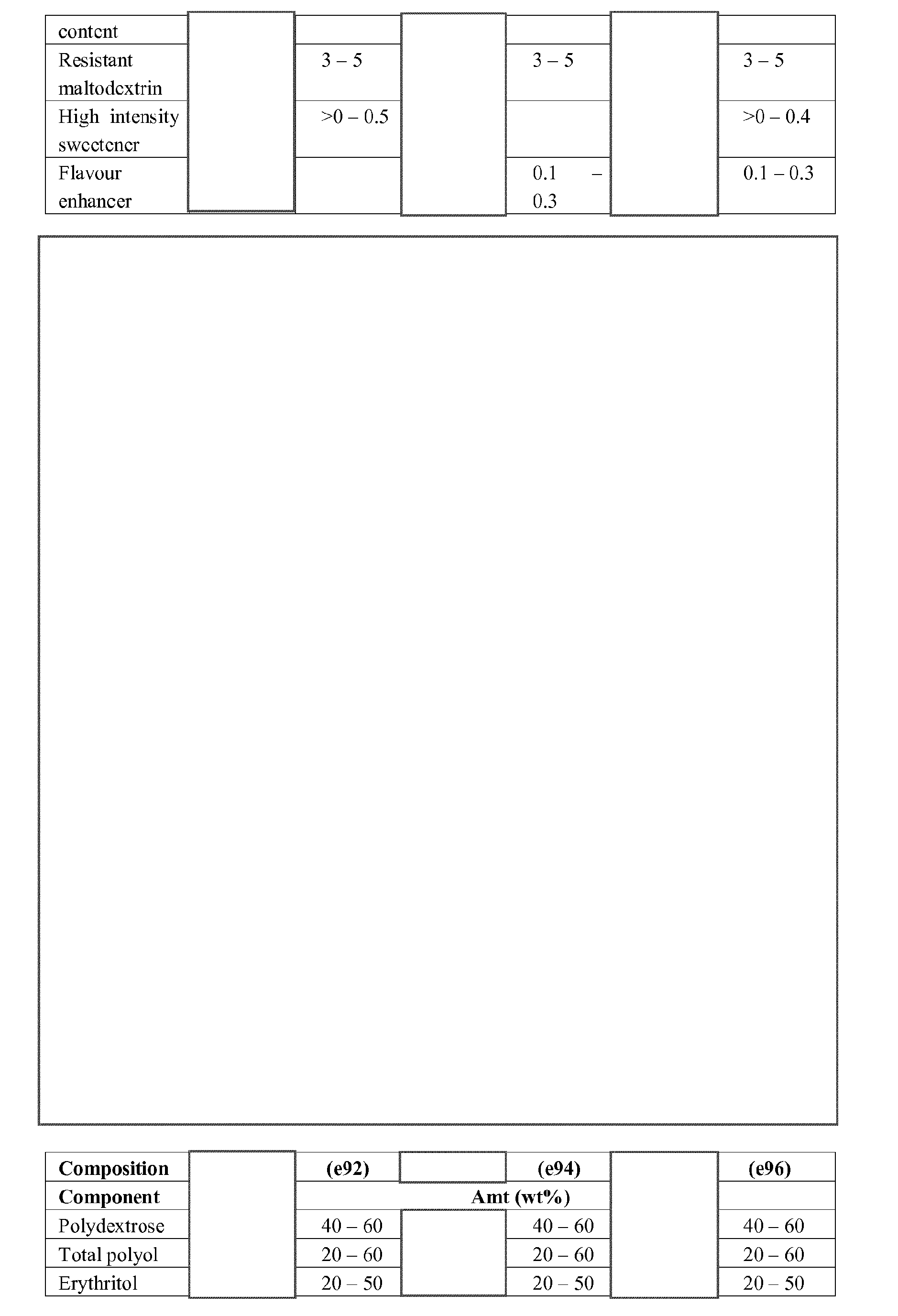

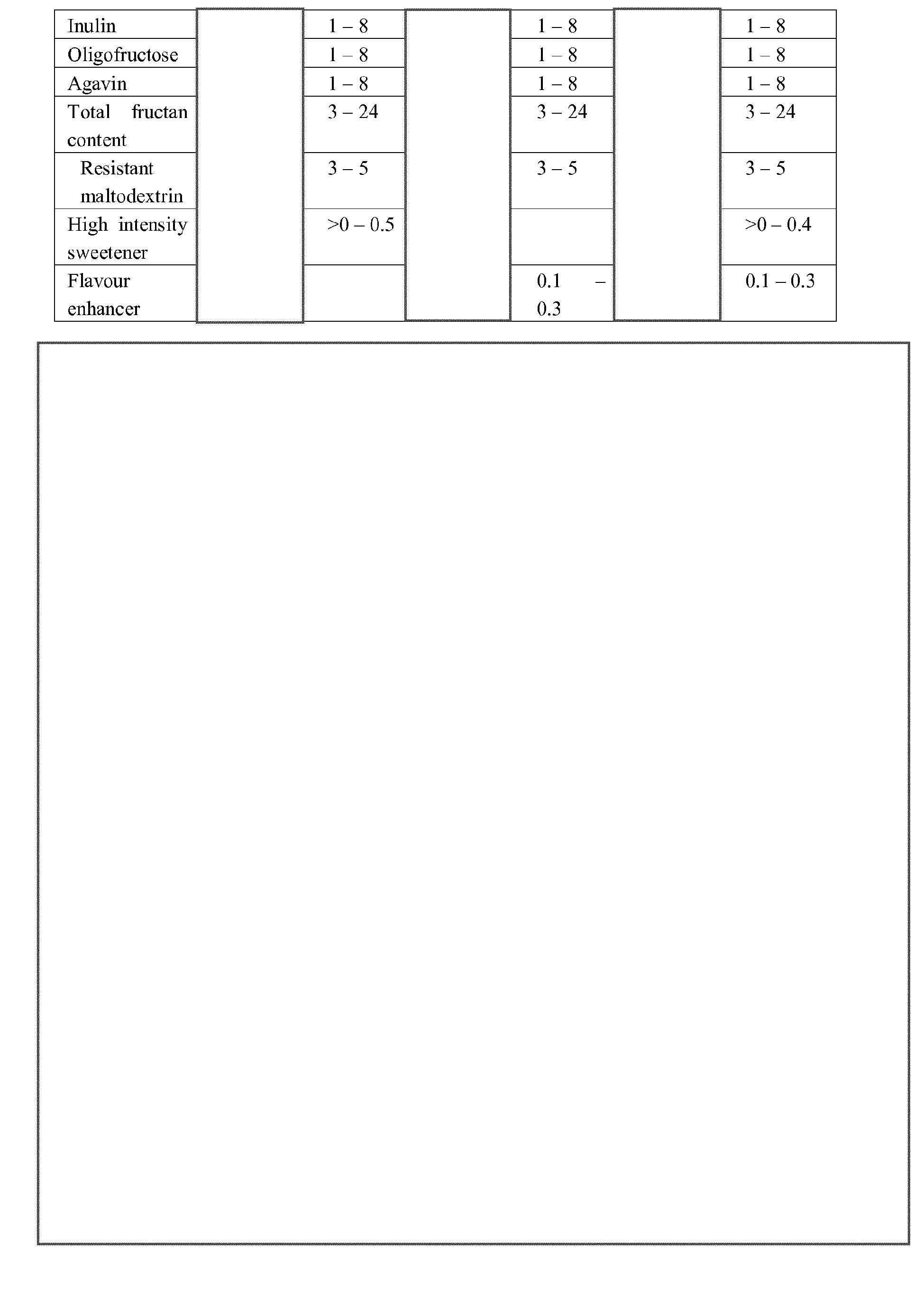

### (f) Sugar replacement compositions comprising further components

Additional components that may be used in the sugar replacement compositions of the present invention are soluble non-selective non-digestible fibers, insoluble non-selective non-digestible fibers, vitamins, minerals, health promoting bacteria and/or anti-caking agents.

If soluble and/or insoluble non-selective non-digestible fibers are employed in the sugar replacement compositions of the present invention, it is preferred to use them in amounts of from 0.05 weight% to 10 weight%, more preferably from 0.1 weight% to 5 weight% and most preferably in an amount of from 0.15 weight% to 2.5 weight%.

If an anti-caking agent is used, it is preferable to add the anti-caking agent in an amount of 0.1 to 0.5 weight% and more preferably in an amount of from 0.2 to 0.3 weight%.

If a vitamin or a mineral is used, it is preferable to add these components in such small amounts that recommended daily allowances for the respective vitamins and/or minerals are not exceeded when using amounts of the sugar replacement composition of the present invention, which correspond to typical daily consumptions of sugar.

The amount indications provided herein for the optional ingredients (soluble and/or insoluble non-selective non-digestible fibers, vitamins, minerals, health promoting bacteria and/or anti-caking agents) are valid in connection with all of the compositions shown in the above tables.

### (g) Balance between polysaccharide components and oligosaccharide components

It may be advantageous for various reasons to select the components and relative amounts of the sugar replacement composition of the present invention such that said sugar replacement composition comprises polysaccharide components in a total amount of from 30 to 75 weight %, preferably 45 to 65 weight %, and that the total amount of oligosaccharide components is from 5 to 45 weight %, preferably 10 to 30 weight %.

By maintaining such a balance of oligosaccharide components and polysaccharide components, it is possible to further improve the health benefits of the sugar replacement composition of the present invention, to properly adjust its browning characteristics as well as its structural characteristics.

### 4.3. Components

### 4.3.1. Polydextrose

Polydextrose is a polysaccharide consisting of glucose repeating units that are linked via different types of linkages, wherein 1 → 6 bonds are mainly present. Smaller amounts of other repeating units such as sorbitol and citric acid may also be present. Polydextrose is a soluble fiber that has a caloric value of only about 1kcal/g since it is indigestible for the human body. It is also advantageous insofar as it has prebiotic properties and can mask the cooling effect of erythritol. Polydextrose is commercially available under the trade names Litesse, Sta-Lite and Winway.

### 4.3.2. Erythritol

Erythritol is a sugar alcohol (polyol) having the IUPAC name (2R,3S)-butane-1,2,3,4-tetraol. As noted above, erythritol has a low caloric value of about 0.2 kcal/g and a sweetness that is about 60 to 70% of the sweetness of sugar. Erythritol shows less of the undesired side effects (flatulence and laxative effects) of other polyols such as maltitol. It is commercially available under a variety of different trade names.

### 4.3.3. Other Polyols

According to the present invention, further polyols may optionally be used in addition to erythritol. A preferred further polyol is isomalt. Isomalt is a sugar alcohol consisting of an equimolar mixture of two disaccharides, which are composed of glucose and mannitol and glucose and sorbitol, respectively. It has a caloric value of about 2 kcal/g and it is tooth friendly. Its sweetness is approximately 50% of that of sugar. However, it may lead to flatulence and it may have laxative effects on the human body. According to some embodiments of the present application, no isomalt is present.

Further polyols that can optionally be used in the present invention are maltitol, xylitol, glycerin, sorbitol and others.

When using such other polyols in addition to erythritol, it is preferred to use such other polyols in an amount of from more than 0 weight% to 40 weight%, preferably more than 0 weight% to 25 weight% and even more preferably more than 0 weight% to 10 weight%.

### 4.3.4. Resistant Maltodextrin

Similar to polydextrose, resistant maltodextrins are polysaccharides based on glucose repeating units. Resistant maltodextrins primarily have α-(1→4) and α-(1→6) glycosidic linkages as well as further glycosidic linkages. Resistant maltodextrins are characterized by a high degree of branching. Due to this highly branched structure and the unusual linkages found in its structure, resistant maltodextrin is not digested by the human body and therefore identified as resistant maltodextrin. Maltodextrin may be present in a variety of different degrees of polymerization. Typically, resistant maltodextrin contains approximately equal amounts of oligosaccharide components and polysaccharide components. Preferably, the relative amount of polysaccharide components is higher than that of oligosaccharide components, such that about 50% of the resistant maltodextrin has a degree of polymerization above 11. Resistant maltodextrin does not lead to flatulence and also has no laxative effects. Moreover, its use is advantageous because it has prebiotic properties.

### 4.3.5. Inulin and Oligofructose

Inulin is an oligo- and/or polysaccharide consisting of D-fructose residues. These residues are linked by (3-(2→1)-linkages. These chains of fructose repeating units are terminated by a β-(2→1)-linked glucose residue. Inulin is commercially available under the trade name Raftilin®. Inulin has prebiotic properties and is thus advantageous for the gastrointestinal health. Excessive ingestion of inulin can however lead to flatulence. The relative amount of inulin employed in the sugar replacement compositions of the present invention is therefore limited as specified above. In the context of the present invention, inulin is also advantageous as a component that is suitable for masking the cooling effect of erythritol.

Oligofructose is an oligosaccharide, wherein fructose units are linked by β-(2→1)-linkages. In fact, oligofructose can be obtained by hydrolytic or enzymatic degradation of inulin. Consequently, the degree of polymerization of oligofructose is lower than that of inulin.

Unfortunately, there is no generally accepted degree of polymerization distinguishing between inulin and oligofructose products. That is, products having a degree of polymerization in the range of from 7 to 10 are sometimes identified as inulin and sometimes as oligofructose. In the context of the present invention, the term "inulin" is used to define oligo- and polysaccharides having an average degree of polymerization of 7 or more, whereas "oligofructose" is used to define oligosaccharides having an average degree of polymerization of less than 7.

If a mixture of inulin and oligofructose is used, the relative amounts of the two components can be derived from the quantities of "inulin" and "oligofructose" starting materials that are incorporated into the sugar replacement composition of the present invention. If this information is not available, the relative amounts of "inulin" and "oligofructose" according to the above definition of the present invention can be determined by experimentally quantifying the relative amounts of the individual β-(2→1)-linked fructan components having a degree of polymerization of 1, 2, 3, 4, etc., to thereby obtain an experimentally determined distribution of degrees of polymerization; and by curve-fitting two mono-disperse distribution curves to the experimentally determined distributions of β-(2→1)-linked fructan components.

An alternative type of oligofructose is made by transfructosylation on sucrose using a β-fructosidase of *Aspergillus niger.* This type of oligofructose is also referred to as fructooligosaccharide (FOS). Contrary to the inulin degradation products, the fructooligosaccharides always have a terminal glucose residue. The degree of polymerization of fructooligosaccharides is typically from 3 to 5. In the context of the present invention both types of oligofructose can be used. Depending on the desired properties of the sugar replacement composition of the present invention, a suitable type of oligofructose may be chosen. For instance, fructooligosaccharide is less reactive in browning reactions. Hence, if it is desired to provide a sugar replacement composition that gives rise to enhanced browning effects, e.g. in some bakery products, it may be preferred to use oligofructose that is a degradation product of inulin. On the other hand, if it is preferred to avoid (excessive) browning, the use of fructooligosaccharide may be more advantageous.

Oligofructose is commercially available under the trade name Raftilose®.

Oligofructose exhibits some sweetness, which is approximately 30 to 50% of the sweetness of sugar. Oligofructose has a low caloric value and contributes to gastrointestinal tract health. However, it may lead to flatulence. It is therefore preferred to use only relative small amounts of oligofructose in the sugar replacement composition of the present invention, as specified above.

### 4.3.6. Agavin

Agavin is a term characterizing fructan-type oligosaccharides and polysaccharides derived from agave plants and/or dasylirion plants. The structure of agavin-type fructans is rather complex. Agavins are mainly based on fructose repeating units. The molecules are typically branched and contain blocks that are based on fructose repeating units that are linked by inulin-type β-(2→1)-linkages and other blocks based on fructose repeating units linked by levan-type β-(2→6)-linkages. Additionally, glucose repeating units are also incorporated. The origin, isolation and characterization of agavins is described, for instance, in "Agave Fructans as Prebiotics" by M.G. Lopez and J.E. Urias-Silvas in Recent Advances in Fructooligosaccharides research, 2007, 1-14 and "Water-soluble carbohydrates and fructan structure patterns from agave and dasylirion species" by N.A. Mancilla-Margalli and M.G. Lopez in Journal of Agricultural and Food Chemistry, 2006, 7832-7839.

Different types of agavins are known and degrees of polymerization may vary broadly at least in a range of from 3 to 32. Such agavins are prebiotic and thus contribute to gastrointestinal tract health. They may advantageously be used as a substitute for inulin and/ or oligofructose, or in addition to these other fructan-type components.

### 4.3.7. Total Fructans

According to yet another embodiment of the present invention, inulin and oligofructose are present and optionally agavin and further fructan components (like levan-type and graminan-type compounds) as long as these further fructan components are suitable for human consumption.

### 4.3.8. High Intensity Sweeteners

In principle, any high intensity sweetener, which is permitted for human consumption, may be used as a component of the sugar replacement composition of the present invention. Suitable high intensity sweeteners and their relative sweetness compared to the sweetness of sugar are the following: cyclamate (30-50), glycyrrhizin (50), aspartame (120-200), acesulfame K (200), saccharine (250-300), stevioside (300), sucralose (600), monelline (1500-2000), neohesperidine DC (1800), alitame (2000), thaumatin (2000-3000) and neotame (8000). In addition to the high intensity sweeteners listed above, it is also possible to use stevia extract or monk-fruit extract. Of course, any combination of two or more high intensity sweeteners, including especially the above-mentioned high intensity sweeteners, may also be used in accordance with the present invention. Among such compositions, it is particularly advantageous to use a combination of acesulfame K and neohesperidene DC in a ratio of acesulfame K to neohesperidine DC in the range of from 9.5 to 11.5 and preferably 10.0 to 11.0.

### 4.3.9. Flavour Enhancers

The above-mentioned acesulfame K has an unpleasant bitter and metallic aftertaste. This unpleasant aftertaste can be masked by combining it with neohesperidene DC. There is furthermore a synergistic enhancement of the sweetness effect. Hence, neohesperidene DC acts not only as a sweetener in its own right but additionally as a flavor enhancer for acesulfame K. It thus has a dual function. Another flavor enhancer is glucono-δ-lactone. Glucono-δ-lactone has the effect of enhancing the sweetness sensation caused by other sweeteners.

### 4.3.10. Insoluble Fibers

In some aspects of the present invention, the sugar replacement composition further comprises insoluble non-selective non-digestible polysaccharides. Examples of insoluble non-selective non-digestible polysaccharides are cellulose and hemicellulose. These polysaccharides are found *inter alia* in cereal fibers such as wheat fibers. The use of wheat fiber is thus contemplated in the context of the present invention. Such fibers may typically have an average length between 20 and 80 µm. The average length preferably is in the range of from 25 to 45 µm. The use of wheat fibers is preferred in particular in combination with the use of oligofructose. This combination may be particularly advantageous for bakery applications because advantageous crust color and brilliance may be accomplished when using this combination of components. Using wheat fibers in addition to oligofructose in the sugar replacement composition of the present invention allows to avoid the generation of a too dark crust and crumb.

The use of such insoluble non-selective non-digestible fibers also contributes to the beneficial health effects of the sugar replacement composition of the present invention. In particular, such fibers aid in preventing constipation and reducing blood sugar levels in people suffer from diabetes.

### 4.3.11. Soluble Fibers

In addition or alternatively to the insoluble non-selective non-digestible polysaccharides, it is furthermore possible to use one or more soluble non-selective non-digestible polysaccharides in the context of the present invention. As possible soluble non-selective non-digestible polysaccharides for use in the present invention, the following may be mentioned: xanthan, tara, carrageenan, tragacanth, locust bean gum, agar, guar gum, arabic gum, carboxymethyl cellulose, and pectin. The use of such polysaccharides is advantageous insofar as they contribute to an increased shelf life and softness of the sugar replacement composition of the present invention. If carrageenan is used as the soluble non-selective non-digestible polysaccharide, it is particularly preferred to use kappa carrageenan. This polysaccharide is preferably used in an amount of from 0.05 to 2 weight% and more preferably in an amount of from 0.05 to 1 weight% and most preferably in an amount of from 0.3 to 0.7 weight%.

According to another preferred embodiment of this aspect of the present invention, carboxymethyl cellulose or a combination of carboxymethyl cellulose and microcrystalline cellulose is used as the soluble non-selective non-digestible polysaccharide component. This type of polysaccharide is advantageous because it contributes to the accomplishment of a desired viscosity in viscous food preparations, which matches that of food preparations containing sugar.

The use of such soluble non-selective non-digestible polysaccharides is advantageous insofar as it contributes to the beneficial health effect on the gastrointestinal tract of the consumer. This is because these polysaccharides are non-selectively fermented in the colon to yield short chain fatty acids, which are helpful in preventing colon cancer and give rise to further beneficial health effects. Additionally, the use of soluble non-selective non-digestible polysaccharides may also be advantageous in suppressing flatulence and laxative effects that may be caused by other components that may be employed in the sugar replacement composition of the present invention (e.g. oligofructose or some polyols).

### 4.3.12. Further optional components

According to the present invention, it is furthermore possible to add yet further components, which may contribute to the advantageous properties of the sugar replacement composition of the present invention (or which may reduce undesired effects of the sugar replacement composition). For instance, it is possible in the context of the present invention to incorporate one or more anti-flatulence agents into the sugar replacement composition. As possible anti-flatulence agents, the following may be mentioned: dimethicone, activated charcoal, simethicone (i.e. dimethicone activated by SiO₂), chili, capsaicin, garlic, ginger, krachai, lemon grass and tumeric.

According to another embodiment, it is possible to incorporate an anti-caking agent into the sugar replacement compositions of the present invention. A typical anti-caking agent suitable for use in the present invention is SiO₂.

According to yet another embodiment, it is possible to incorporate allulose (also known as D-psicose) as a further sweetening ingredient. This component is available under the brand name Dolcia Prima from Tate & Lyle. It has a sweetness of 70% of sugar. If it is incorporated, the amount of high intensity sweetener or sweetness enhancer may be reduced accordingly to attain the desired target sweetness.

Further optional ingredients are vitamins, minerals and health promoting bacteria. Among the vitamins, vitamins A, B, C, E and K may for instance be used as optional components. As minerals, the following elements may for instance be used: Ca, Mg, K, P, Se, Fe and Zn. As health promoting bacteria, the following may for instance be used: probiotic species of the genera *bifidobacterium* and *lactobacillus.*

The relative amounts of these components are not particularly limited as long as these optional components do not interfere with the sugar replacement-characteristics of the composition of the present invention.

### 4.4. Granulation

The sugar replacement composition of the present invention may be granulated to improve its handling and to reduce the formation of dust during usage. Granulation is typically effected by stirring the components of the present invention with small quantities of a suitable solvent. A preferred solvent is water but alternative solvents may also be used. According to a preferred embodiment, granulation is performed by liquid spraying. In this embodiment, it is preferable to use a spraying liquid that contains water and 0.05 to 0.2 weight% of a binder, wherein the binder is selected from cellulose and cellulose derivatives. According to a particularly preferred embodiment, the spraying liquid contains water and 0.05 to 0.2 weight%, most preferably 0.1 weight% of methyl cellulose. These preferred and more preferred embodiments are advantageous due to their reduced hygroscopicity. Weight% indications for the spraying liquid characterize the amount incorporated into the sugar replacement composition and are based on the total weight of the sugar replacement composition being 100 weight%.

According to another advantageous embodiment in connection with any of the above or below embodiments, it is possible to incorporate the high intensity sweetener into the spraying liquid. This option has the advantage of permitting more accurate control of the weight of high intensity sweetener that is incorporated into the sugar replacement composition of the present invention.

The particle sizes after granulation are typically in the range of from 0.1 to 2.5 mm and more preferably 0.2 to 1.5 mm.

### 4.5. Properties

The sugar replacement composition of the present invention is characterized by the following advantageous properties.

### (a) Sweetness

The sugar replacement composition of the present invention may exhibit a sweetness that is comparable to the sweetness of sugar (either on a weight basis or on a volume basis). According to other embodiments of the present invention, the sugar replacement composition has a sweetness that is lower than the sweetness of sugar and typically in the range of from 10 % to 95% of the sweetness of sugar preferably in the range of from 25 to 80% of the sweetness of sugar and more preferably in the range of from 30% to 60% of the sweetness of sugar (on a weight basis).

### (b) Structural characteristics of sugar

The sugar replacement composition of the present invention has, at least in some aspects, the same structural characteristics as sugar. This means that it allows to accomplish the same sponge-like structure in bakery products and to accomplish the same viscous structure in jams, ice creams and sorbets.

### (c) Browning Effect

At least in some embodiments, the sugar replacement compositions of the present invention give rise to a browning effect upon heating, which is comparable to that of sugar when being used in caramelization and/or in bakery products. As explained above, the degree of browning can be fine-tuned by adjusting the relative amount of oligosaccharide components such as oligofructose in relation to the polysaccharide components. Moreover, addition of wheat fibers may also be contemplated in this fine-tuning process.

### (d) Low caloric value

The sugar replacement compositions of the present invention are generally characterized by very low caloric values. Preferred embodiments of the present invention have caloric values of 100 kcal/100 g or less and preferably 80 kcal/100 g.

### (e) Low glycemic index

The sugar replacement compositions of the present invention are furthermore suitable for use by diabetic patients because they are characterized by a low glycemic index.

The glycemic index of the sugar replacement compositions of the present invention is typically in the range of from 0 to 40 and preferably in the range of 10 to 30.

### (f) Additional health benefits

The use of one or more prebiotic fibers in the present invention contributes to a healthy gastrointestinal tract of the consumer. That is, the growth of beneficial probiotic bacteria is advantageously supported by the consumption of the sugar replacement composition of the present invention. Additionally, consumption of the sugar replacement composition of the present invention contributes to the formation of short chain fatty acids in the gastrointestinal tract of the consumer. These acids are advantageous in reducing pH of the gastrointestinal tract and especially the colon in an advantageous manner. This leads to improved uptake of Ca and Mg and to a reduction of the risk of colon cancer. Further benefits are increased faecal bulk, reduced transit time and softer stools.

Yet another beneficial health effect is the reduced cariogenicity of the sugar replacement composition of the present invention. In fact, there is reduced cariogenicity not only in comparison with sugar but also in comparison with other sugar replacement compositions known from the state of the art. Said reduced cariogenicity is accomplished in particular in those embodiments of the present invention, wherein neither inulin nor oligofructose are contained.

### 4.6. Uses

### 4.6.1. Consumer Product

The sugar replacement compositions of the present invention may be used as sugar replacers for the end consumer. For such applications, it is advantageous to provide a sugar replacement composition in accordance with the present invention, which has about the same sweetness as that of sugar. Local consumer habits should be considered in this respect. For instance, in many European countries, bakery recipes are provided wherein the amount of sugar is indicated on a weight basis. For such countries, it is preferred to provide a sugar replacement composition of the present invention, which exhibits the same sweetness as that of sugar on a weight basis.

Conversely, in the United States, many bakery recipes are provided with volume-based indications for the amounts of ingredients. In view of such local preferences, it is also preferred to provide the sugar replacement compositions of the present invention having a sweetness about the same as the sweetness of sugar on a volume basis. Such products may be marketed in the United States and similar countries.

Of course, it is also possible to offer a reduced sweetness product to end consumers. In this case, the degree of sweetness should be clearly indicated on the product label.

For end consumer use, it is particularly advantageous to provide a sugar replacement composition of the present invention, which is capable of achieving as many functional properties of sugar as possible.

### 4.6.2. Bakery Products

The sugar replacement composition of the present invention may be used not only by end consumer when making bakery products, but also by commercial producers of bakery producers. In both instances, it is vital to provide a sugar replacement composition exhibiting excellent structural effects and browning effects.

### 4.7. Examples

### Example 1

A sugar replacement composition of the present invention was manufactured by mixing the following ingredients in the amounts specified below:

| **Ingredient** | **Amount (g)** |
|---|---|
| Polydextrose | 53.865 |
| Resistant maltodextrin | 4.0 |
| Fructo-oligosaccharide | 10.0 |
| Inulin | 10.0 |
| Sucralose | 0.135 |
| Erythritol | 22.0 |

The sweetness of the resulting sugar replacement composition is approximately the same as that of sugar on a weight basis. The resulting sugar replacement composition was tested by incorporating it into biscuits and ice cream. The following beneficial effects were observed: The biscuits containing the exemplified sugar replacement composition exhibited a crunchiness that was better than that of comparative biscuits based on the same recipe (except for using sugar instead of the exemplified sugar replacement composition). The ice cream containing the exemplified sugar replacement composition exhibited a very good texture. In particular, it was easier to scoop the ice cream with the exemplified sugar replacement composition than the comparative ice cream based on the same recipe (except for using sugar instead of the exemplified sugar replacement composition).

### Comparative Examples 2-1 to 2-12 and inventive Example 2-13

Use of comparative and inventive sugar replacement compositions in shortbread Shortbread was manufactured using the following ingredients, recipe and protocol:

### Ingredients

Pasteurized butter, Brand: "'t Boerinneke/La Fermière"
Fat: 82.19g of which 49.89g saturated
Carbohydrates: 0.5g
Protein: 0.6g
Salt: 0g
Energie 3060KJ 744 Kcal /100 g.
Flour, Brand: "Vloeiende bloem Carrefour."
Protein: 9.6g
Carbohydrates: 70.5g min. 0.7g
Fat: 1.1g of which saturated: 0.2g
Fibers: 4.3 g
Sodium 0.003 g
1402 KJ 330 Kcal/100 g
Baking Powder, Brand: "Oetker Backin"
Raising agents: E450 and E500ii
Cornstarch.
Recommended dosage by Oetker 16g/500 g flour

### Tested Sugar Replacement Compositions

| Ingredient | Experiment 1* | Experiment 1 (%) | Experiment 2* | Experiment 2 (%) |
|---|---|---|---|---|
| Polydextrose RA90 | 561.13 | 28.057% | 579.25 | 28.963% |
| Polydextrose lit Ultra | 561.13 | 28.057% | 579.25 | 28.963% |
| Resistant Maltodextrin | 0 | 0.000% | 86.04 | 4.302% |
| Fructo-oligosaccharide | 145.84 | 7.292% | 0 | 0.000% |
| Inulin | 145.84 | 7.292% | 150.56 | 7.528% |
| Isomalt | 62.5 | 3.125% | 64.52 | 3.226% |
| Erythritol | 520.86 | 26.043% | 537.68 | 26.884% |
| Sucralose | 2.7 | 0.135% | 2.7 | 0.135% |
| | 2000 | 100.000% | 2000 | 100.000% |

| Ingredient | Experiment 3* | Experiment 3 (%) | Experiment 4* | Experiment 4 (%) |
|---|---|---|---|---|
| Polydextrose RA90 | 648.65 | 32.433% | 1057.3 | 52.865% |
| Polydextrose lit Ultra | 648.65 | 32.433% | 0 | 0.000% |
| Resistant Maltodextrin | 0 | 0.000% | 240 | 12.000% |
| Fructo-oligosaccharide | 100 | 5.000% | 160 | 8.000% |
| Inulin | 100 | 5.000% | 140 | 7.000% |
| Isomalt | 0 | 0.000% | 400 | 20.000% |
| Erythritol | 500 | 25.000% | 0 | 0.000% |
| Sucralose | 2.7 | 0.135% | 2.7 | 0.135% |
| | 2000 | 100.000% | 2000 | |

| Ingredient | Experiment 5* | Experiment 5 (%) | Experiment 6* | Experiment 6 (%) |
|---|---|---|---|---|
| Polydextrose RA90 | 0 | 0.000% | 660 | 66.000% |
| Polydextrose lit Ultra | 608.65 | 60.865% | 0 | 0.000% |
| Resistant Maltodextrin | 0 | 0.000% | 40 | 4.000% |
| Fructo-oligosaccharide | 90 | 9.000% | 40 | 4.000% |
| Inuline | 90 | 9.000% | 0 | 0.000% |
| Isomalt | 0 | 0.000% | 0 | 0.000% |
| Erythritol | 210 | 21.000% | 258.65 | 25.865% |
| Sucralose | 1.35 | 0.135% | 1.35 | 0.135% |
| | 1000 | 100.000% | 1000 | 100.000% |

| | | | Experiment | |
|---|---|---|---|---|
| Ingredient | Experiment 7* | Experiment 7 (%) | 8* | Experiment 8 (%) |
| Polydextrose RA90 | 0 | 0.000% | 660 | 66.000% |
| Polydextrose lit Ultra | 660 | 66.000% | 0 | 0.000% |
| Resistant Maltodextrin | 40 | 4.000% | 40 | 4.000% |
| Fructo-oligosaccharide | 40 | 4.000% | 40 | 4.000% |
| Inuline | 0 | 0.000% | 0 | 0.000% |
| Isomalt | 0 | 0.000% | 0 | 0.000% |
| Erythritol | 258.65 | 25.865% | 258.65 | 25.865% |
| Sucralose | 1.35 | 0.135% | 1.35 | 0.135% |
| | 1000 | 100.000% | 1000 | |

| | | | Experiment | |
|---|---|---|---|---|
| Ingredient | Experiment 9* | Experiment 9 (%) | 10* | Experiment 10 (%) |
| Polydextrose RA90 | 660 | 66.000% | 660 | 66.000% |
| Polydextrose lit Ultra | 0 | 0.000% | 0 | 0.000% |
| Resistant Maltodextrin | 0 | 0.000% | 0 | 0.000% |
| FOS | 40 | 4.000% | 40 | 4.000% |
| Inuline | 40 | 4.000% | 40 | 4.000% |
| Isomalt | 0 | 0.000% | 0 | 0.000% |
| Erythritol | 258.65 | 25.865% | 258.65 | 25.865% |
| Sucralose | 1.35 | 0.135% | 1.35 | 0.135% |
| | 1000 | 100.000% | 1000 | 100.000% |

| | Experiment | | | |
|---|---|---|---|---|
| Ingredient | 11* | Experiment 11 (%) | Experiment 12* | Expe riment 12 (%) |
| Polydextrose RA90 | 650 | 65.000% | 698.65 | 69.865% |
| Polydextrose lit Ultra | 0 | 0.000% | 0 | 0.000% |
| Resistant Maltodextrin | 118.65 | 11.865% | 0 | 0.000% |
| FOS | 80 | 8.000% | 100 | 10.000% |
| Inuline | 70 | 7.000% | 100 | 10.000% |
| Isomalt | 0 | 0.000% | 0 | 0.000% |
| Erythritol | 80 | 8.000% | 100 | 10.000% |
| Sucralose | 1.35 | 0.135% | 1.35 | 0.135% |
| | 1000 | 100.000% | 1000 | |

| Ingredient | Experiment 13 | Experiment 13 (%) | | |
|---|---|---|---|---|
| Polydextrose RA90 | 538.65 | 53.865% | | |
| Polydextrose lit Ultra | 0 | 0.000% | | |
| Resistant Maltodextrin | 40 | 4.000% | | |
| FOS | 70 | 8.000% | | |
| Inuline | 70 | 7.000% | | |
| Isomalt | 30 | 3.000% | | |
| Erythritol | 250 | 25.000% | | |
| Sucralose | 1.35 | 0.135% | | |
| | 1000 | 100,000% | | |

| | | | | |
|---|---|---|---|---|
| *: Comparative Experiment, not in accordance with the present invention. | | | | |

### Additional information:

Experiment 4 = Commerical formulation according to WO 2006/015880 A1, sold under trade name Sweetwell® formulation
Experiment 8 = experiment 6 with crushed erythritol
Experiment 9 = with polydextrose (particle size > 300µm)
Experiment 10 = with polydextrose (particle size < 300µm)

### Recipe Shortbread

125g butter
112g sugar replacement composition as specified above
2g vanilla aroma liquid
1g salt
1 egg yolk (20g)
1 egg (50g)
250g flour
2g baking Powder (soda)

### Protocol

Mix the egg yolk with the egg.
Cream the butter (temperature: 22°C), add sugar replacement composition and mixture egg/egg yolk
Add sieved flour and baking powder and mix short.
Let it rest for at least 12 hours in the fridge.

Roll out dough (2.5mm). Cut into rounds using cookie cutter. Place the shortbreads on a silicon baking sheet and bake for 12 minutes at 180°C. Open oven to release the vapor pressure and bake another 2 minutes

All tests were performed in the same way. Only one baking plate was used. It was placed in the middle of the oven

### Results

Taste and crispness were evaluated. All samples gave a pleasant taste. Crispness was very good for all samples except the sample of Comparative Experiment 4, which was less crisp.

It was furthermore observed that some of the sample of Comparative Experiment 4 spontaneously broke after a few days whereas none of the other samples broke spontaneously at any time.

### Comparative Example 3 - Use of sugar replacement composition in cake

Cakes were made using the sugar replacement compositions of the above comparative experiments 1 to 4 as well as a reference cake with sugar. The recipe and protocol of the cake were as follows:

### Recipe

250g Butter
200g Sugar or sugar replacement composition
250g Eggs
220g Flour
15g Corn starch
8g Baking powder
4g Vanilla aroma liquid
2g Salt

### Protocol

Preheat the oven at 180°C. Butter the cake pans. Mix the eggs (separately)

Cream the butter with a mixer at average speed and add sugar or sugar replacement composition and the eggs. Mix again some seconds at high speed.

Sifting Flour, starch and baking powder and add to mixer bowl at low speed.

Scrape down sides and mix at high speed. Put batter (750g) in cake pan and bake for 40 minutes at 180°C with ventilation. Release vapor preassure and bake for another 10 minutes. Let cool in pans on a wire rack for 15 minutes. Remove from pans and let cool completely on wire rack.

Height of all baked cakes: 7.5cm.

### Results

The cakes made with sugar replacement compositions of Comparative Experiments 1 to 3 exhibited a crust that was comparable to that of the sugar-containing reference cake. They also exhibited the same cracks in the top surface, which are characteristic of a good cake. The color of the spongy body was the same for all these cakes. Conversely, the cake made with the sugar replacement composition of Comparative Experiment 4 exhibited a crust that was thinner than in the other cakes. There were no characteristic cracks in the top surface and the color of the spongy body was greyer than in the other cakes.

## Claims

1. Sugar replacement composition comprising
- polydextrose, and at least one polyol,
- wherein the content of the at least one polyol is from 10 weight% to 70 weight%,
- wherein at least one of the polyol components is erythritol,
- wherein the content of erythritol is from 10 weight% to 70 weight%, wherein said sugar replacement composition comprises in addition to the polyol component
- 30 to 60 weight %, preferably 40 to 55 weight %, of polydextrose,
- more than 0 to 15 weight %, of inulin,
- more than 0 to 15 weight %, of oligofructose,
- 3 to 5 weight % of resistant maltodextrin, and optionally a sweetening component comprising one or more sweeteners selected from
- high intensity sweeteners, and
- sweetness enhancers
wherein all weight % indications are based on the total of the sugar replacement composition being 100 weight %.

2. Sugar replacement composition according to claim 1, wherein said sugar replacement composition comprises oligosaccharide components and polysaccharide components such that the total amount of polysaccharide components is from 30 to 75 weight %, preferably 45 to 65 weight %, and the total amount of oligosaccharide components is from 5 to 45 weight %, preferably 10 to 30 weight %, wherein the weight % indications are based on the total of the sugar replacement composition being 100 weight %.

3. Sugar replacement composition according to one of the preceding claims, wherein said sugar replacement composition comprises one or more of the following components:
more than 0 to 10 weight %, of oligofructose, and
more than 0 to 10 weight % of agavin.

4. Sugar replacement composition according to one of the preceding claims, wherein said oligofructose is fructo-oligosaccharide that has a DP between 3 to 5.

5. Sugar replacement composition according to one of the preceding claims, whereby said sugar replacement composition comprises 0.01 to 10 weight %, preferably 0.05 to 3 weight % of insoluble, non selective, non digestible polysaccharide and/or 0.01 to 10 weight %, preferably 0.05 to 3 weight % of soluble, non selective, non digestible polysaccharide, wherein the weight indications are based on the total of the sugar replacement composition being 100 weight %.

6. Sugar replacement composition according to one of the preceding claims, wherein a high intensity sweetener is present, which is selected from the group consisting of acesulfame K, neohesperidine DC, aspartame, neotame, saccharin, sucralose, alitame, thaumatine, cyclamate, glycyrrhizin, stevioside/stevia extract and monk fruit extract, or is a combination of high intensity sweeteners containing two or more of the listed high intensity sweeteners.

7. Sugar replacement composition according to any one of the preceding claims, wherein the sugar replacement composition comprises glucono-δ-lacton, preferably in an amount between 0.10 and 0.20 weight %, wherein the weight indication is based on the weight of the sugar replacement composition representing 100 weight %.

8. Use of the sugar replacement composition according to one of the preceding claims for manufacturing bakery products.

9. Process for producing the sugar replacement composition according to any one of claims 1 to 7, comprising the step of granulating the sugar replacement composition by means of liquid spraying, press agglomeration and/or spray-drying.

10. Process for producing a food preparation, comprising the step of mixing the sugar replacement composition according to any one of claims 1 to 7 with one or more food ingredients and/or the step of adding the sugar replacement composition to an intermediate product.

## Patentansprüche

1. Zuckerersatzzusammensetzung, umfassend
- Polydextrose und mindestens ein Polyol,
- wobei der Gehalt des mindestens einen Polyols 10 Gew.-% bis 70 Gew.-% beträgt,
- wobei mindestens eine der Polyolkomponenten Erythrit ist,
- wobei der Gehalt an Erythrit 10 Gew.-% bis 70 Gew.-% beträgt, wobei die Zuckerersatzzusammensetzung zusätzlich zu der Polyolkomponente folgendes umfasst
- 30 bis 60 Gew.-%, vorzugsweise 40 bis 55 Gew.-%, Polydextrose,
- mehr als 0 bis 15 Gew.-% Inulin,
- mehr als 0 bis 15 Gew.-% Oligofructose,
- 3 bis 5 Gew.-% resistentes Maltodextrin, und gegebenenfalls eine Süßstoffkomponente, umfassend einen oder mehrere Süßstoffe, die ausgewählt sind aus
- hochintensiven Süßstoffen, und
- Süßkraftverstärkern
wobei alle Angaben in Gew.-% auf der gesamten Zuckerersatzzusammensetzung, die 100 Gew.-% beträgt,
basieren.

2. Zuckerersatzzusammensetzung gemäß Anspruch 1, wobei die Zuckerersatzzusammensetzung Oligosaccharidkomponenten und Polysaccharidkomponenten umfasst, so dass die Gesamtmenge der Polysaccharidkomponenten 30 bis 75 Gew.-%, vorzugsweise 45 bis 65 Gew.-%, und die Gesamtmenge der Oligosaccharidkomponenten 5 bis 45 Gew.-%, vorzugsweise 10 bis 30 Gew.-%, beträgt, wobei die Angaben in Gew.-% auf der gesamten Zuckerersatzzusammensetzung, die 100 Gew.-% beträgt, basieren.

3. Zuckerersatzzusammensetzung gemäß mindestens einem der vorstehenden Ansprüche, wobei die Zuckerersatzzusammensetzung eine oder mehrere der folgenden Komponenten umfasst:
mehr als 0 bis 10 Gew.-% Oligofructose, und
mehr als 0 bis 10 Gew.-% Agavin.

4. Zuckerersatzzusammensetzung gemäß mindestens einem der vorstehenden Ansprüche, wobei die Oligofructose ein Fructo-Oligosaccharid, das einen DP zwischen 3 bis 5 aufweist, ist.

5. Zuckerersatzzusammensetzung gemäß mindestens einem der vorhergehenden Ansprüche, wobei die Zuckerersatzzusammensetzung 0,01 bis 10 Gew.-%, vorzugsweise 0,05 bis 3 Gew.-% unlösliches, nicht-selektives, nicht-verdauliches Polysaccharid und/oder 0,01 bis 10 Gew.-%, vorzugsweise 0,05 bis 3 Gew.-% lösliches, nicht-selektives, nicht-verdauliches Polysaccharid enthält, wobei die Gewichtsangaben auf der gesamten Zuckerersatzzusammensetzung, die 100 Gew.-% beträgt, basieren.

6. Zuckerersatzzusammensetzung gemäß mindestens einem der vorstehenden Ansprüche, wobei ein hochintensiver Süßstoff vorhanden ist, der ausgewählt ist aus der Gruppe bestehend aus Acesulfam K, Neohesperidin DC, Aspartam, Neotam, Saccharin, Sucralose, Alitam, Thaumatin, Cyclamat, Glycyrrhizin, Steviosid/Stevia-Extrakt und Mönchsfrucht-Extrakt, oder eine Kombination von hochintensiven Süßstoffen ist, die zwei oder mehr der aufgeführten hochintensiven Süßstoffe enthält.

7. Zuckerersatzzusammensetzung gemäß mindestens einem der vorstehenden Ansprüche, wobei die Zuckerersatzzusammensetzung Glucono-δ-Lacton, vorzugsweise in einer Menge zwischen 0,10 und 0,20 Gew.-%, umfasst, wobei die Gewichtsangabe auf der gesamten Zuckerersatzzusammensetzung, die 100 Gew.-% beträgt, basiert.

8. Verwendung der Zuckerersatzzusammensetzung gemäß mindestens einem der vorstehenden Ansprüche zur Herstellung von Backwaren.

9. Verfahren zur Herstellung der Zuckerersatzzusammensetzung gemäß mindestens einem der Ansprüche 1 bis 7, umfassend einen Schritt, bei dem die Zuckerersatzzusammensetzung mittels Flüssigkeitszerstäuben, Pressagglomeration und/oder Sprühtrocknen granuliert wird.

10. Verfahren zur Herstellung einer Lebensmittelzubereitung, umfassend einen Schritt, bei dem die Zuckerersatzzusammensetzung gemäß mindestens einem der Ansprüche 1 bis 7 mit einem oder mehreren Lebensmittelzutaten gemischt wird und/oder einen Schritt, bei dem die Zuckerersatzzusammensetzung zu einem Zwischenprodukt zugegeben wird.

## Revendications

1. Composition de remplacement de sucre comprenant :
- du polydextrose et au moins un polyol,
- dans laquelle la teneur du au moins un polyol est comprise entre 10 % en poids et 70 % en poids,
- dans laquelle au moins un des composants polyol est l'érythritol,
- dans laquelle la teneur de l'érythritol est comprise entre 10 % en poids et 70 % en poids, dans laquelle ladite composition de remplacement de sucre comprend en plus du composant polyol
- entre 30 et 60 % en poids, de préférence entre 40 et 55 % en poids de polydextrose,
- plus de 0 à 15 % en poids d'inuline,
- plus de 0 à 15 % en poids d'oligofructose,
- entre 3 et 5 % en poids de maltodextrine résistante,
et, facultativement, un composant édulcorant comprenant un ou plusieurs édulcorants sélectionnés parmi
- des édulcorants à haute intensité et
- des exhausteurs de sucrosité
dans laquelle toutes les indications de % en poids sont basées sur le total de la composition de remplacement de sucre qui est de 100 % en poids.

2. Composition de remplacement de sucre selon la revendication 1, dans laquelle ladite composition de remplacement de sucre comprend des composants oligosaccharides et des composants polysaccharides de telle sorte que la quantité totale de composants polysaccharides varie entre 30 et 75 % en poids, de préférence entre 45 et 65 % en poids et que la quantité totale de composants oligosaccharides varie entre 5 et 45 % en poids, de préférence entre 10 et 30 % en poids, dans laquelle les indications de % en poids sont basées sur le total de la composition de remplacement de sucre qui est de 100 % en poids.

3. Composition de remplacement de sucre selon l'une des revendications précédentes, dans laquelle ladite composition de remplacement de sucre comprend un ou plusieurs des composants suivants :
plus de 0 à 10 % en poids d'oligofructose et
plus de 0 à 10 %en poids d'agavine.

4. Composition de remplacement de sucre selon l'une des revendications précédentes, dans laquelle ledit oligofructose est un fructo-oligosaccharide qui présente un DP compris entre 3 et 5.

5. Composition de remplacement de sucre selon l'une des revendications précédentes, grâce à laquelle la composition de remplacement de sucre comprend entre 0,01 et 10 % en poids, de préférence entre 0,05 et 3 % en poids de polysaccharide insoluble, non sélectif, non digestible et/ou entre 0,01 et 10 % en poids, de préférence entre 0,05 et 3 % en poids de polysaccharide soluble, non sélectif, non digestible, dans laquelle les indications de poids sont basées sur le total de la composition de remplacement de sucre qui est de 100 % en poids.

6. Composition de remplacement de sucre selon l'une des revendications précédentes, dans laquelle un édulcorant à haute intensité est présent, qui est sélectionné dans le groupe constitué par l'acésulfame K, la néohespéridine DC, l'aspartame, le néotame, la saccharine, le sucralose, l'alitame, la thaumatine, le cyclamate, la glycyrrhizine, un extrait de stévioside/stévia et un extrait de fruit des moines ou est une combinaison d'édulcorants à haute intensité contenant au moins deux des édulcorants à haute intensité listés.

7. Composition de remplacement de sucre selon l'une des revendications précédentes, dans laquelle la composition de remplacement de sucre comprend de la glucono-δ-lactone, de préférence en une quantité comprise entre 0,10 et 0,20 % en poids, dans laquelle l'indication de poids est basée sur le poids de la composition de remplacement de sucre représentant 100 % en poids.

8. Utilisation de la composition de remplacement de sucre selon l'une des revendications précédentes pour fabriquer des produits de boulangerie.

9. Procédé pour produire la composition de remplacement de sucre selon l'une quelconque des revendications 1 à 7, comprenant l'étape de granulation de la composition de remplacement de sucre au moyen d'une pulvérisation de liquide, d'une agglomération par pressage et/ou d'un séchage par pulvérisation.

10. Procédé pour produire une préparation alimentaire, comprenant l'étape de mélange de la composition de remplacement de sucre selon l'une quelconque des revendications 1 à 7 avec un ou plusieurs ingrédients alimentaires et/ou l'étape d'ajout de la composition de remplacement de sucre à un produit intermédiaire.
